# FASCICULE DE BREVET EUROPEEN

(11) **EP 0 369 087 B1**
(45) Date de publication et mention de la délivrance du brevet: **22.06.1994**
(21) Numéro de dépôt: 88470021.2
(22) Date de dépôt: 16.11.1988
(51) Int. Cl.: G01B 7/06, B23Q 17/09

(54) **Procédé pour la détection et la mesure directe et en continu de l'usure des outils de coupe par sonde électrique incorporée**
Verfahren zum direkten und kontinuierlichen Wahrnehmen von Verschleiss bei Schneidwerkzeugen mittels einer elektrischen eingebetteten Sonde
Process for detecting directly and continuously the wear of cutting-tools, by an incorporated electrical transducer

(43) Date de publication de la demande: 23.05.1990
(73) Titulaire: UNIVERSITE DE NANCY I, F-54000 Nancy (FR)
(72) Inventeur: Barlier, Claude, F-88100 Saint Die (FR)
(74) Mandataire: Poupon, Michel

(56) Documents cités:
- CH-A- 358 302
- DE-A- 3 535 473
- FR-A- 2 184 195
- FR-A- 2 616 218
- US-A- 4 420 253

## Description

La présente invention a pour objet un procédé pour la mesure et/ou la détection directe et en continu de l'usure en dépouille, en cratère et/ou par défaillance brutale d'un outil de coupe et, plus particulièrement, d'une plaquette de carbure utilisés pour l'usinage de pièces sur des machines-outils, dans lequel on intègre à l'outil ou la plaquette de carbure une sonde qui détecte le contact avec la pièce en cours d'usinage lorsque l'usure atteint ladite sonde, ladite sonde étant une sonde électrique isolée thermiquement et électriquement logée dans un alésage de la plaquette ou de l'outil et ayant un diamètre compris entre quelques centièmes et quelques dixièmes de millimètres.

L'invention a également un instrument de coupe ou d'usure obtenu selon ce procédé.

On connaît déjà de multiples procédés et moyens permettant le contrôle, la mesure et/ou ladétection de l'usure de pièces soumises à usure lors de leur utilisation.

Il peut s'agir de pièces en toutes matières par exemple en acier, en céramique, etc... Il peut aussi s'agir de matériaux composites, ou encore de pins à mise rapportée ou monobloc.

De manière générale, tous les systèmes connus sont conçus de manière à intervenir lorsque la pièce à contrôler n'est pas en fonctionnement.

Ceci est le cas en particulier pour des pièces d'usure telles que plaquettes de carbure, qui sont actuellement surveillées, comme tous les outils de coupe, par contrôles directs ou indirects.

Les contrôles directs consistent par exemple en des palpeurs électromagnétiques ou optiques, ou encore en des témoins d'usure visuels incorporés à la plaquette et surveillés par l'opérateur.

Les contrôles indirects sont liés à la mesure de grandeurs physiques accompagnant la mise en oeuvre de l'outil et variant d'une manière significative quand l'état de l'outil change.

De tels contrôles consistant par exemple à mesurer la puissance consommée, les efforts de coupe, l'émission acoustique, le niveau vibratoire, etc...

Toutes ces mesures sont opérées pendant le déroulement du processus de travail de l'outil ou de la plaquette, mais sont par nature des mesures indirectes. Il en découle un risque de retard dans la détection de l'usure ainsi que des risques de réaction à des bruits de fond parasites (brevet FR-A-2 184 195).

En outre, la corrélation est difficile à établir entre l'évolution de la grandeur physique mesurée et l'évolution de l'usure.

Il n'existe pas pour l'instant de procédé permettant de déterminer, et le cas échéant de quantifier, directement sur la pièce d'usure en cours d'utilistion le degré d'usure de celle-ci.

Selon l'invention ce résultat est obtenu avec un procédé du type décrit en exergue, caractérisé en ce que la sonde est insérée par un procédé choisi dans le groupe consistant en :
- insertion au frittage,
- insertion dans un alésage réalisé par un laser.

Il avait certes déjà été proposé dans le document DE-A-3 535 473 un insert en couche. Mais il s'agit d'une proposition totalement inapplicable dans la pratique et simplement théorique car il faut modifier la matrice de carbure. Dans cette réalisation, l'outil obtenu a nécessairement un comportement pendant la coupe très différent d'un outil industriel d'origine, ce qui en limite considérablement le domaine d'application.

La sonde pourra consister en une gaine conductrice dont l'isolation par rapport à la plaquette sera obtenue avec une couche de colle ou de ciment d'épaisseur suffisante.

Il pourra également s'agir d'une sonde composée d'un fil recouvert d'une gaine isolante (comme pour un thermocouple) ou encore d'une gaine de verre enrobant un cylindre conducteur en acier.

La sonde débouche d'un côté sur la face de l'outil à l'endroit précis où on désire que se déclenche le signal d'usure.

A l'autre extrémité de la sonde, on soude un fil conducteur gainé. Un autre fil électrique est relié à la masse de la machine-outil, donc à la pièce usinée.

Entre ces deux fils on dispose un montage électrique de contrôle de passage du courant.

Ledit montage déclenchera un signal lorsqu' il y aura contact électrique entre les deux parties du circuit au niveau de la plaquette. Le signal peut consister par exemple en l'allumage d'une diode.

Selon un mode possible de mise en oeuvre, on peut prévoir une pluralité de capteurs de ce type, disposés à des endroits successifs et correspondant à des degrés d'usure progressifs. On peut alors quantifier l'usure de la plaquette et la suivre dans le temps.

On comprendra mieux l'invention à l'aide de la description ci-après d'un mode de mise en oeuvre donné à titre d'exemple non limitatif, en référence aux dessins annexés dans lesquels ;
- la figure 1 est une vue en perspective d'un ensemble porte-plaquette avec sa plaquette d'usure ;
- la figure 2 est une vue schématique en coupe partielle d'une plaquette conforme à l'invention ;
- les figures 2A et 2B sont des vues identiques à la figure 2, illustrant respectivement l'usure en dépouille et en cratère ;
- la figure 2C illustre une variante de mise en oeuvre ;
- la figure 3 illustre le principe de fonctionnement conforme à l'invention ;
- la figure 4 est un schéma électrique de principe appliqué à un tour.

Un outil porte-plaquette (ou monobloc) (1), partie d'une machine-outil, supporte une plaquette d'usure (2) de section générale triangulaire ou polygonale qui peut être maintenue sur celui-ci par une bride (3) et une cale support (4).

Le problème posé consiste à détecter et/ou mesurer l'usure en dépouille (ou en cratère) (5) de la plaque d'usure.

Selon l'invention, on propose d'insérer dans la plaquette une sonde (6) de préférence électrique, qui débouche sur la face d'attaque (7) de la pièce d'usure et sur la dépouille (5).

Prenant en compte les températures élevées atteintes, entre 800 et 1 400°C, la sonde sera isolée thermiquement.

Elle sera reliée électriquement côté face d'attaque (7) à un montage électrique qui sera décrit ultérieurement.

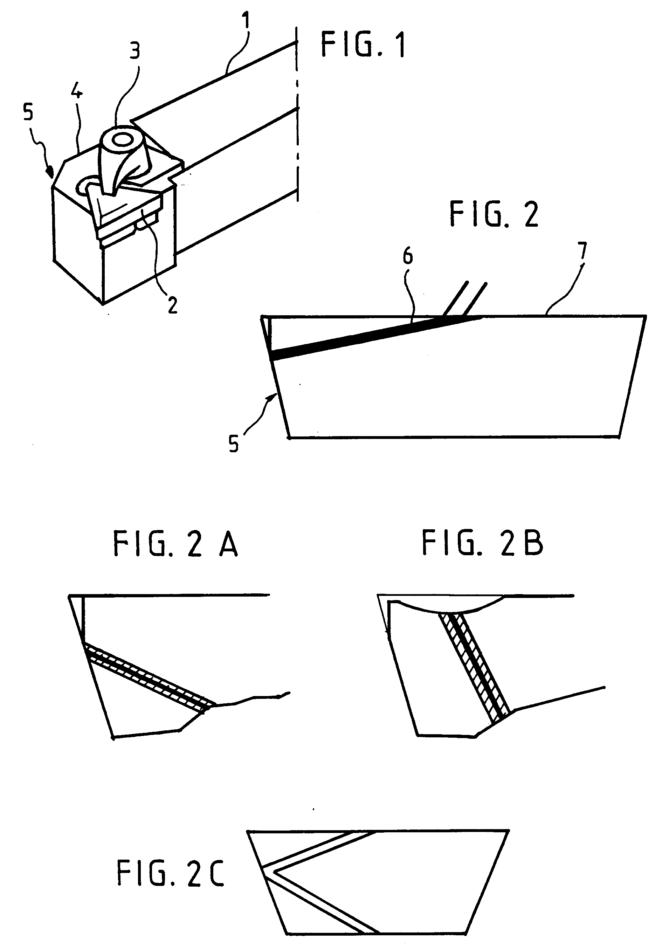

On a représenté aux figures 2A et 2B des positionnements de sonde possibles en fonction du type d'incident à détecter.

A la figure 2C on a représenté une variante permettant d'éviter le raccordement sur la face de coupe.

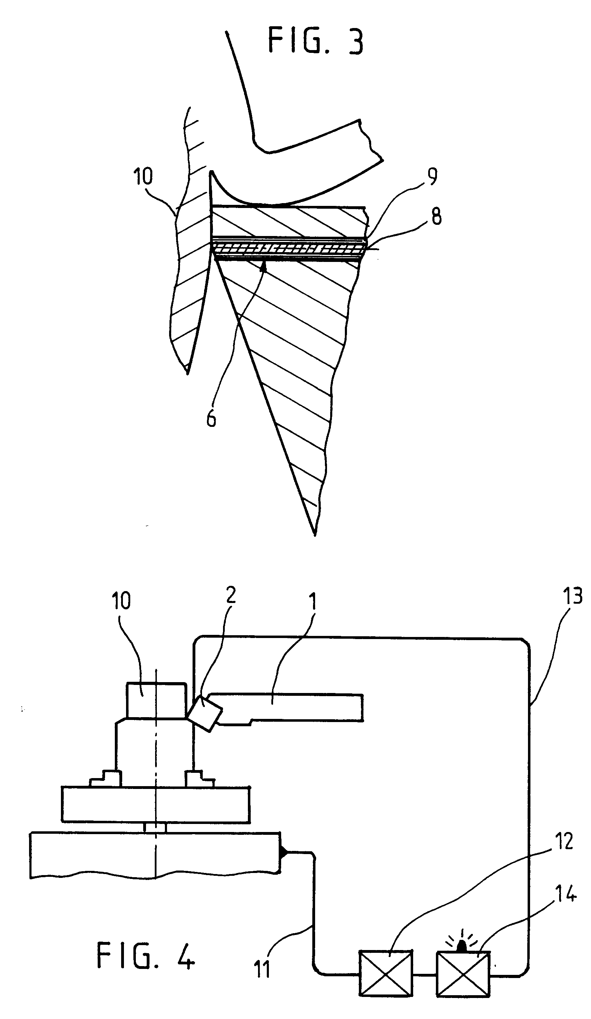

On se référera à la figure 3 où l'on peut voir le cylindre conducteur (8) de la sonde, entouré d'une gaine isolante (9) constituée de colle, de ciment réfractaire ou de tout autre matériau isolant.

Ledit cylindre conducteur peut être inséré dans la plaquette par perçage laser, ou de fabrication, lors du frittage de ladite plaquette.

Lorsque l'usure atteint une certaine valeur, déterminée en fonction de l'usure acceptable, le cylindre (8) vient en contact électrique avec la pièce à usinée (10). On fera ainsi un circuit qui déclenche un signal d'usure.

Un tel circuit est représenté à la figure 4. On y a représenté le porte-plaquette (1), la plaquette (2) et la pièce usinée (10).

La machine-outil a sa masse reliée par un conducteur (11) à une alimentation (12), qui est elle-même reliée à la sonde de la plaquette par un fil (13). Sur le circuit est placé un signal (14), par exemple lumineux ou sonore.

Ce signal peut être traité par exemple par l'armoire de commande de la machine outil (par exemple à commande numérique) en vue d'un changement automatique de l'outil en fin de passe.

Le contact entre la sonde (8) et le fil (13) pourra être une connexion de contact ou tout autre, permettant le changement rapide de la plaquette ou de l'outil.

On réalise ainsi une détection d'usure directe et en continu pendant l'usinage.

On peut concevoir de munir une plaquette de ce type de plusieurs sondes, correspondant chacune à des degrés d'usure successifs.

On réalise ainsi un contrôle continu, direct et quantitatif de l'usure d'une plaquette en cours de fonctionnement.

On comprendra que ce principe peut se généraliser à d'autres outils coupants ou non coupants, par exemple travaillant par abrasion. Pour les outils coupants, ce principe s'adapte parfaitement aux fraises et autres outils tournants d'alésage.

Dans ce dernier cas, un ou plusieurs outils élémentaires peuvent être munis d'un tel système de détection d'usure.

De même, on peut concevoir son application à un outillage tournant avec pièce fixe.

Ce principe trouve son application également dans tous les outillages de découpe, tels que par exemple des cisailles.

## Revendications

1. Procédé pour la mesure et/ou la détection directe et en continu de l'usure en dépouille, en cratère et/ou par défaillance brutale d'un outil de coupe et, plus particulièrement, d'une plaquette de carbure utilisés pour l'usinage de pièces sur des machine-outils, dans lequel on intègre à l'outil ou la plaquette de carbure une sonde qui détecte le contact avec la pièce en cours d'usinage lorsque l'usure atteint ladite sonde, ladite sonde étant une sonde électrique (6) isolée thermiquement et électriquement logée dans un alésage de la plaquette ou de l'outil et ayant un diamètre compris entre quelques centièmes et quelques dixièmes de milimètres, caractérisé en ce que la sonde est insérée par un procédé choisi dans le groupe consistant en :
- insertion au frittage,
- insertion dans un alésage réalisé par un laser.

2. Instrument de coupe cu d'usure, caractérisé en ce qu'il est obtenu par la mise en oeuvre du procédé selon la revendication 1.

## Claims

1. Process for the measurement and/or the detection directly and continuously of wear by surface erosion, pitting, and/or brutal failure of a cutting tool and , more particularly, of a carbide insert utilised for the machining of components on machine tool, in which one integrates to the tool or carbide insert a transducer which detects the contact with the component in the course of machining when the wear reaches said transducer, said transducer being a thermally and elecrically isolated electrical transducer (6) housed in a bore in the insert or in the tool and having a diameter between some hundredths and some tenths of millimetres, characterised in that the transducer is inserted by a process chosen from the group consisting of:
- insertion to the sinter,
- insertion in a bore formed by laser.

2. Cutting or abrasion instrument characterised in that it is made by a method according to Claim 1.

## Patentansprüche

1. Verfahren zum direkten und kontinuierlichen Wahrnehmen des Verschleisses hinsichtlich Freiwinkel, Krater und/oder eines plötzlichen Ausfalls eines Schneidwerkzeuges und insbesondere einer Karbidplatte für die Bearbeitung von Werkstücken auf einer Werkzeugmaschine, bei dem in das Werkzeug oder in die Karbidplatte eine Sonde integriert ist, welche den Kontakt mit dem Werkstück während der Bearbeitung überwacht, bis der Verschleiß die genannte Sonde erreicht, wobei die genannte Sonde eine thermisch und elektrisch isolierte, innerhalb einer Bohrung der Platte oder des Werkzeugs angeordnete elektrische Sonde (6) ist, die einen Durchmesser hat, welcher zwischen einigen Hundertsteln und einigen Zehnteln eines Millimeters liegt, **dadurch gekennzeichnet**, daß die Sonde durch eines der folgenden Verfahren eingefügt ist:
- Einsetzen durch Sintern,
- Einsetzen in eine durch einen Laser erzeugte Bohrung.

2. Vorrichtung zum Schneiden oder Verschleißen, **dadurch gekennzeichnet**, daß sie durch das Verfahren nach Anspruch 1 erzeugt ist.
